# EUROPÄISCHE PATENTSCHRIFT

(11) **EP 3 976 288 B1**
(45) Veröffentlichungstag und Bekanntmachung des Hinweises auf die Patenterteilung: **22.03.2023**
(21) Anmeldenummer: 20726066.2
(22) Anmeldetag: 13.05.2020
(51) Int. Cl.: B21J 15/02, B21J 15/28, G06F 17/14

(54) **VERFAHREN ZUR PROZESSÜBERWACHUNG, COMPUTERPROGRAMM, VORRICHTUNG ZUR DATENVERARBEITUNG, COMPUTERLESBARES MEDIUM UND VORRICHTUNG ZUR PROZESSÜBERWACHUNG**
PROCESS MONITORING METHOD, COMPUTER PROGRAM, DATA PROCESSING DEVICE, COMPUTER-READABLE MEDIUM AND PROCESS MONITORING DEVICE
PROCÉDÉ DE SURVEILLANCE DE PROCESSUS, PROGRAMME INFORMATIQUE, DISPOSITIF DE TRAITEMENT DE DONNÉES, SUPPORT LISIBLE PAR ORDINATEUR ET DISPOSITIF DE SURVEILLANCE DE PROCESSUS

(30) Priorität: 29.05.2019 DE 102019207885
(43) Veröffentlichungstag der Anmeldung: 06.04.2022
(73) Patentinhaber: Audi AG, 85045 Ingolstadt (DE)
(72) Erfinder: BARKHAUSEN, Frank Björn, 74074 Heilbronn (DE); KÜHNER, Peter, 74177 Bad Friedrichshall (DE); HORNBOSTEL, Norbert, 74388 Talheim (DE)
(86) Internationale Anmeldenummer: PCT/EP2020/063310
(87) Internationale Veröffentlichungsnummer: WO 2020/239443

(56) Entgegenhaltungen:
- DE-A1-102007 059 422
- DE-A1-102015 001 922

## Beschreibung

Die Erfindung betrifft ein Verfahren zur Prozessüberwachung bei einem mechanischen Fügeverfahren. Die Erfindung betrifft weiterhin ein Computerprogrammprodukt sowie eine Vorrichtung zur Prozessüberwachung.

Mechanische Fügeprozesse, bei denen die Fügestelle von zwei Seiten zugänglich sein kann, umfassen beispielsweise das Halbhohlstanznieten, Clinchen, Vollstanznieten oder Clinchnieten sowie das Setzen von mechanischen Funktionselementen wie beispielsweise Stanzbolzen, Einpressbolzen, Stanzmuttern, Einpressmuttern und anderen.

Im Automobilbau erfolgt die Herstellung einer Fahrzeugkarosserie in einer vollautomatisierten Prozesskette. Die Prozesskette kann dabei beispielsweise das Bereitstellen von Aluminiumhalbzeugen (Blech- und Gusswerkstoffe sowie Profile) und/oder deren Kombination mit Stahlwerkstoffen und das anschließende Zusammenfügen mittels mechanischer Fügetechnologien umfassen.

Der mechanische Fügeprozess kann dabei überwacht werden, indem charakteristische Prozessgrößen aufgezeichnet werden. Charakteristische Prozessgrößen umfassen beispielsweise die Fügekraft in Abhängigkeit des Fügewegs oder die für den Fügeprozess aufgebrachte Energie über die Fügezeit. Herkömmlich werden die bei jedem Fügeprozess aufgezeichneten Prozessgrößen, beispielsweise Kraft/Weg oder Energie/Zeit zueinander in Beziehung gesetzt und mit einem Referenzverlauf verglichen. Für diesen Vergleich können beispielsweise Verfahren wie die Hüllkurventechnik oder die Fenstertechnik oder eine Kombination dieser Techniken verwendet werden.

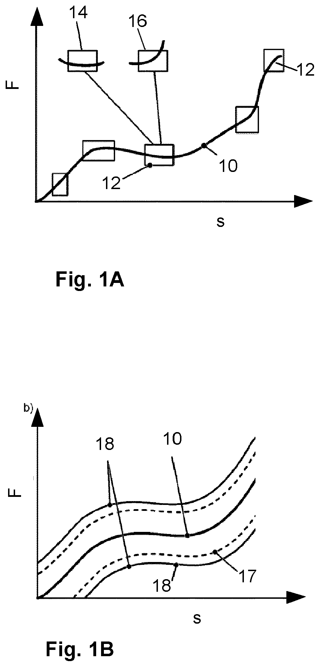

Figur 1A veranschaulicht die Prozessüberwachung mit Hilfe der Fenstertechnik. In Figur 1A bezeichnet 10 eine aufgenommene Messkurve, beispielsweise Kraft in Abhängigkeit des Weges. Eine Vielzahl von Toleranzfenstern 12 werden im Verlauf der Messkurve 10 platziert. Innerhalb der Toleranzfenster 12 wird die Messkurve jeweils mit einem Referenzverlauf verglichen. Bezugszeichen 14 bezeichnet ein Vergleichsfenster für einen ordnungsgemäßen Verlauf. Bezugszeichen 16 bezeichnet ein Vergleichsfenster für einen nicht ordnungsgemäßen Verlauf. Durch Vergleich der jeweiligen Toleranzfenster mit den Vergleichsfenstern kann festgestellt werden, ob die Messkurve bzw. der Fügeprozess in Ordnung ist oder nicht.

Figur 1B veranschaulicht das Hüllkurvenverfahren. Beim Hüllkurvenverfahren wird überwacht, inwieweit die gemessene Messkurve 10 innerhalb eines Bereichs zwischen zwei benachbarten Hüllkurven 18 liegt. Wenn die Messkurve die durchgezogene Linie 18 überschreitet, wird der Prozess als nicht in Ordnung eingestuft. Berührt oder schneidet die Messkurve 10 die gestrichelte Grenze 17, so wird ein Warnsignal ausgegeben. Selbstverständlich können auch Kombinationen dieser Verfahren verwendet werden.

Bei den in Figur 1A und 1B dargestellten Verfahren werden für jeden einzelnen Fügevorgang Hüllkurven oder Vergleichsfenster definiert.

Aufgrund unterschiedlicher Fügeaufgaben und Betriebsmittel ergibt sich daher eine für jeden Fügepunkt individuelle Hüllkurve oder ein individuelles Vergleichsfenster. Die entsprechenden Datensätze unterscheiden sich je nach Fügeaufgabe und Betriebsmittel sowie je nach Abtastrate der verwendeten Sensoren zur Aufzeichnung der Prozessgrößen, wodurch sich eine divergierende Anzahl an Wertpaaren (beispielsweise Kraft/Weg, Energie/Zeit) für jeden einzelnen Fügepunkt ergibt.

Durch die in den Figuren 1A und 1B vorgestellten Verfahren können Unterschiede im Prozessablauf erkannt werden, die auf einen fehlerhaften Prozess hindeuten. Allerdings ist nicht in allen Fällen eine eindeutige Bewertung als in Ordnung oder als nicht in Ordnung möglich. Weiterhin ist eine Zuordnung des Kurvenverlaufs zu einem speziell aufgetretenen Fehler nur begrenzt oder gar nicht möglich.

In der Druckschrift DE 10 2007 059422 A1 wird ein Verfahren zum Setzen von Nietelementen beschrieben. Die Druckschrift DE 10 2015 001922 A1 betrifft ein Verfahren zum Ermitteln einer Qualität eines Fügevorgangs.

Der vorliegenden Erfindung liegt die Aufgabe zugrunde, ein verbessertes Verfahren zur Prozessüberwachung, ein verbessertes Computerprogrammprodukt und eine verbesserte Vorrichtung zur Prozessüberwachung zur Verfügung zu stellen. Insbesondere soll durch das Verfahren eine genauere Prozessüberwachung ermöglicht werden. Weiterhin soll ermöglicht werden, eine Zuordnung der Messewerte zu charakteristischen Fehlerbildern zu ermöglichen.

Gemäß Ausführungsformen wird die Aufgabe durch das Verfahren bzw. den Gegenstand der unabhängigen Patentansprüche gelöst. Vorteilhafte Weiterentwicklungen sind in den abhängigen Patentansprüchen definiert.

Ein Verfahren zur Prozessüberwachung bei einem mechanischen Fügeverfahren umfasst das Empfangen einer Vielzahl von Messwerten fᵢ(xᵢ) bei Durchführung des mechanischen Fügeverfahrens, wobei die Messwerte jeweils mindestens 2 Prozessgrößen fᵢ, xᵢ, mit i = 1... n, zueinander in Beziehung setzen. Das Verfahren umfasst weiterhin das Durchführen einer Fouriertransformation, wobei zu den Messwerten fᵢ(xᵢ) eine Anzahl von Fourierkoeffizienten (ϕ₁, ϕ₂,...ϕₙ, A₁, A₂,... Aₙ) ermittelt wird. Das Verfahren umfasst weiterhin die Reduktion der Anzahl von Fourierkoeffizienten auf einen mindestens 2-dimensionalen Unterraum, wodurch ein Messpunkt (ϕₖ, ϕₗ,....), (ϕₖ, Aₗ,... ) oder (Aₖ, Aₗ,...) erhalten wird. Schließlich erfolgt ein Vergleich des Messpunkts (ϕₖ, ϕₗ,....), (ϕₖ, Aₗ,... ) oder (Aₖ, Al,...) mit mindestens einem Referenzpunkt (Rₖ, Rₗ,...), (Rₖ, Sₗ,...) oder (Sₖ, Sₗ,...) in dem mindestens 2-dimensionalen Unterraum, und das Ermitteln eines Überwachungsergebnisses auf Grundlage des Vergleichs mit dem Referenzpunkt.

Beispielsweise können die Fourierkoeffizienten Phasenwinkel (ϕ₁, ϕ₂,...ϕₙ,) umfassen. Weiterhin können die Fourierkoeffizienten zugehörige Amplituden (A₁, A₂,... Aₙ) umfassen.

Gemäß Ausführungsformen kann der mindestens 2-dimensionale Unterraum entsprechend einem zu untersuchenden Fehler ausgewählt werden. Der 2-dimensionale Unterraum kann beispielsweise derart ausgewählt werden, dass sich bei Betrachtung der Fourierkoeffizienten in diesem Unterraum, eine besonders starke Abweichung zwischen Messpunkt und Referenzpunkt. Auf diese Weise wird einerseits die Zuverlässigkeit der Prozessüberwachung erhöht. Zusätzlich ist es möglich, eine Abweichung einem Fehlertyp zuzuordnen.

Gemäß Ausführungsformen umfasst das Überwachungsergebnis eine Zuordnung zu einem Fehlertyp. Gemäß weiteren Ausführungsformen kann das Überwachungsergebnis das Erkennen einer zeitlichen Prozessveränderung, beispielsweise eine kontinuierliche Prozessveränderung umfassen. Gemäß weiteren Ausführungsformen kann auch nur eine lokal auftretende Einzelabweichung erkannt werden.

Das Verfahren kann weiterhin das Erweitern der empfangenen Messwerte auf eine zuvor definierte Anzahl umfassen. Gemäß Ausführungsformen können die Messwerte durch Fortsetzen der zuletzt gemessenen Prozessgröße fᵢ erweitert werden.

Gemäß weiteren Ausführungsformen können die Messwerte durch Fortsetzen eines Mittelwerts der gemessenen Prozessgrößen fᵢ erweitert werden. Weiterhin können die Messwerte durch Fortsetzen der Prozessgrößen unter Verwendung einer Tangente an einen Bereich der Messwerte erweitert werden.

Das Verfahren kann weiterhin das Auswählen eines bestimmten Wertebereichs [x₁, x₂] umfassen, wobei die Fouriertransformation nur für Wertepaare mit x₁ ≤ xᵢ ≤ x₂ durchgeführt wird. Beispielsweise können hierdurch die Messwerte in einem Unterbereich analysiert werden, in dem Abweichungen besonders gut erkennbar sind. Auf diese Weise können Abweichungen deutlicher hervorgehoben werden. Im Ergebnis kann das Verfahren genauer und empfindlicher gemacht werden.

Gemäß Ausführungsformen kann das Verfahren das Erweitern oder Reduzieren der Messwerte mit x₁ ≤ xᵢ ≤ x₂ auf eine zuvor definierte Anzahl vor Durchführen der Fouriertransformation umfassen. Beispielsweise kann die zuvor definierte Anzahl eine Zweierpotenz sein.

Das Verfahren kann ferner das Durchführen des Vergleichs des Messpunkts in einem weiteren Unterraum umfassen, wobei das Überwachungsergebnis zusätzlich auf Grundlage des Vergleichs mit dem Referenzpunkt in dem weiteren Unterraum ermittelt wird. Auf diese Weise lassen sich beispielsweise Abweichungen aufgrund unterschiedlicher Fehler prüfen.

Gemäß Ausführungsformen umfasst ein Computerprogramm Befehle, die bei der Ausführung des Computerprogramms durch einen Computer diesen veranlassen, das vorstehend beschriebene Verfahren durchzuführen.

Gemäß Ausführungsformen umfasst eine Vorrichtung zur Datenverarbeitung Mittel zur Ausführung des vorstehend beschriebenen Verfahrens.

Ein computerlesbares Medium umfasst Befehle, die bei der Ausführung durch einen Computer diesen veranlassen, das vorstehend beschriebene Verfahren auszuführen.

Gemäß Ausführungsformen umfasst eine Vorrichtung zur Prozessüberwachung bei einem mechanischen Fügeverfahren eine Einrichtung zum Empfangen einer Vielzahl von Messwerten fᵢ(xᵢ) bei Durchführung des mechanischen Fügeverfahrens, wobei die Messwerte jeweils mindestens 2 Prozessgrößen fᵢ, xᵢ, mit i = 1... n, zueinander in Beziehung setzen. Die Vorrichtung umfasst ferner eine Einrichtung zum Durchführen einer Fouriertransformation, wobei zu den Messwerten fᵢ(xᵢ) eine Anzahl von Fourierkoeffizienten (ϕ₁, ϕ₂,...ϕₙ, A₁, A₂,... Aₙ) ermittelt wird. Die Vorrichtung weist darüber hinaus eine Einrichtung zur Reduktion der Anzahl von Fourierkoeffizienten auf einen mindestens 2-dimensionalen Unterraum auf, wodurch ein Messpunkt (ϕₖ, ϕₗ,....), (ϕₖ, Aₗ,.... ) oder (Aₖ, Aₗ,....) erhalten wird. Die Vorrichtung umfasst weiterhin eine Einrichtung zum Vergleichen des Messpunkts (ϕk, ϕl,....), (ϕₖ, Aₗ,.... ) oder (Aₖ, Aₗ,...) mit mindestens einem Referenzpunkt (Rₖ, Rₗ,...), (Rₖ, Sₗ,...) oder (Sₖ, Sₗ,...) in dem mindestens 2-dimensionalen Unterraum, und eine Einrichtung zum Ermitteln eines Überwachungsergebnisses auf Grundlage des Vergleichs mit dem Referenzpunkt.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen.
Die Figuren 1A, 1B veranschaulichen bekannte Verfahren zur Prozessüberwachung.
Figur 2 veranschaulicht ordnungsgemäße und nicht ordnungsgemäße Messkurven.
Figur 3 fasst ein Verfahren gemäß Ausführungsform zusammen.
Figuren 4A und 4B zeigen jeweils Messpunkte in zugehörigen Unterräumen.
Figur 5 veranschaulicht ein Verfahren zur Erweiterung von vorhandenen Messwerten.
Figur 6 zeigt eine Vorrichtung zur Prozessüberwachung.

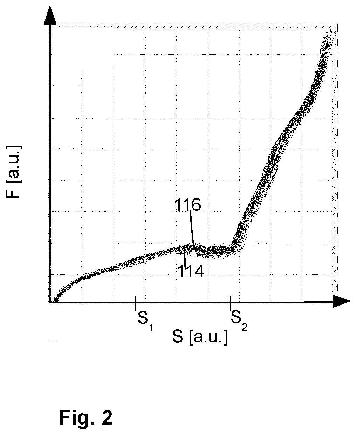

Figur 2 veranschaulicht eine Vielzahl ordnungsgemäßer Messkurven 114 sowie eine Vielzahl nicht ordnungsgemäßer Messkurven 116. Dabei gibt jede der Messkurven 114, 116 die Fügekraft in Abhängigkeit des Fügewegs im Verlauf eines Fügeverfahrens an. Wie in Figur 2 erkennbar ist, kann es mit dem unter Bezugnahme auf die Figuren 1A und 1B beschriebenen Verfahren schwierig sein, eine eindeutige Zuordnung der jeweiligen Messkurve zu ordnungsgemäß oder nicht-ordnungsgemäß zu treffen.

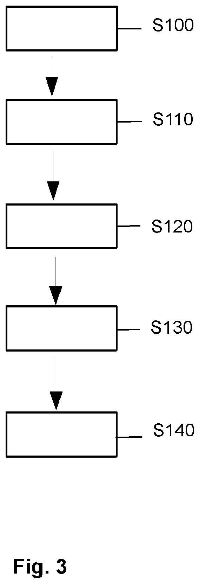

Figur 3 fasst ein Verfahren gemäß Ausführungsform zusammen. Wie nachfolgend erläutert werden wird, umfasst ein Verfahren zur Prozessüberwachung bei einem mechanischen Fügeverfahren das Empfangen (S100) einer Vielzahl von Messwerten fᵢ(xᵢ) bei Durchführung des mechanischen Fügeverfahrens. Dabei setzen die Messwerte jeweils mindestens zwei Prozessgrößen fᵢ, xᵢ mit i = 0... n zueinander in Beziehung. Das Verfahren umfasst ferner das Durchführen (S110) einer Fouriertransformation. Dabei wird zu den Messwerten fᵢ(xᵢ) eine Anzahl von Fourierkoeffizienten (ϕ₁, ϕ₂,...(ϕₙ, A₁, A₂,... Aₙ) ermittelt. Anschließend erfolgt eine Reduktion (S120) der Anzahl von Fourierkoeffizienten auf einen mindestens 2-dimensionalen Unterraum, wodurch ein Messpunkt (ϕₖ, ϕₗ, ...), (ϕₖ, Aₗ) oder (Aₖ, Aₗ) erhalten wird, mit k, l < n. Anschließend erfolgt ein Vergleich (S130) des Messpunkts (ϕₖ, ϕₗ, ...), (ϕₖ, Aₗ, ...) oder (Aₖ, Aₗ, ...) mit mindestens einem Referenzpunkt (Rₖ, Rₗ, ...), (Rₖ, Sₗ,...) oder (Sₖ, Sₗ,...) in dem mindestens 2-dimensionalen Unterraum. Schließlich erfolgt das Ermitteln (S140) eines Überwachungsergebnisses auf Grundlage des Vergleichs mit dem Referenzpunkt.

Mechanische Fügeverfahren, die mit Hilfe des beschriebenen Verfahrens überwacht werden können, umfassen beispielsweise das Hohlstanznieten, Clinchen, Vollstanznieten oder Clinchnieten oder das Setzen von mechanischen Funktionselementen, beispielsweise Stanzbolzen, Stanzmuttern, Einpressbolzen, Einpressmuttern oder Clinchnietbolzen. Der Fachmann wird anhand der vorliegenden Beschreibung weitere Verfahren erkennen, die unter Verwendung des beschriebenen Verfahrens überprüft werden können.

Das Verfahren umfasst das Empfangen einer Vielzahl von Messwerten. Dabei kann, beispielsweise, wenn das Verfahren durch eine Vorrichtung zur Prozessüberwachung ausgeführt wird, die Vorrichtung selbst einen Sensor aufweisen, der jeweils die Prozessgrößen misst. Gemäß Ausführungsformen kann das Verfahren aber auch in einer Vorrichtung durchgeführt werden, die von der Sensorvorrichtung getrennt ist und beispielsweise in einer zentralen Überwachungseinrichtung oder einem zentralen Computer durchgeführt wird. Das Verfahrensmerkmal "Empfangen einer Vielzahl von Messwerten" beinhaltet somit auch ein übliches Datenübertragungsverfahren von beispielsweise einem Sensor zu einem Computer.

Die Messwerte können beispielsweise die Fügekraft in Abhängigkeit des Fügewegs sein oder auch die für den Fügeprozess aufgebrachte Energie in Abhängigkeit der Fügezeit. Die Messwerte werden beispielsweise in gleichmäßigen Zeitintervallen aufgenommen. Beispielsweise kann eine Vielzahl von Messwerten, beispielsweise mehr als 100 Messwerte oder mehr als 200 Messwerte aufgenommen werden. Als Ergebnis ergibt sich eine Vielzahl von Messwerten fᵢ(xᵢ) mit i gleich 1, ... n.

Anschließend erfolgt eine Fouriertransformation der Messwerte. Dies kann beispielsweise durch eine diskrete Fouriertransformation (DFT, "discrete fourier transformation"), beispielsweise eine schnelle Fouriertransformation (FFT, "fast fourier transformation") oder eine Kombination aus DFT und FFT erfolgen. Als Ergebnis wird zu den Messwerten eine Anzahl von Fourierkoeffizienten ermittelt. Beispielsweise können die Fourierkoeffizienten (ϕ₁, ϕ₂, ...ϕₙ) die Phasenwinkel umfassen. Gemäß Ausführungsformen werden zusätzlich die zugehörigen Amplituden ermittelt werden (A₁, A₂, ..., Aₙ). Gemäß weiteren Ausführungsformen können jedoch auch die üblichen Fourierkoeffizienten für den Sinus- und Kosinus-Term ermittelt werden. Mit Hilfe der Fouriertransformation ist es somit möglich, eine Messkurve über eine Vielzahl von Messwerten auf einen einzigen Punkt in einem 2n-dimensionalen Raum zu transformieren.

Da der Vergleich von Punkten in einem 2n-dimensionalen Raum schwierig zu handhaben ist, wird die Anzahl von Fourierkoeffizienten auf einen mindestens 2-dimensionalen Unterraum reduziert, d.h. einen m-dimensionalen Unterraum mit m ≥ 2. Als Ergebnis wird ein Messpunkt (ϕₖ, ϕₗ, ...), (ϕₖ, Aₗ, ...) oder (Aₖ, Aₗ, ...) mit k, l < n in dem mindestens 2-dimensionalen Unterraum erhalten. Wenn der Messpunkt (ϕₖ, ϕₗ, ...) oder (Aₖ, Aₗ, ...) ist, so ist k von l verschieden. Bei Vergleich zweier unterschiedlicher Koeffizienten, beispielsweise Phasenwinkel und Amplitude, kann k gleich l sein. k kann in diesem Fall auch von l verschieden sein. Bei Betrachtung der entsprechenden Phasenwinkel wird hier beispielsweise ϕₖ gegen ϕₗ, aufgetragen. Alternativ kann auch ϕₖ gegen Aₗ oder gegen Aₖ aufgetragen werden. Sodann wird der Messpunkt (ϕₖ, ϕₗ, ...), (ϕₖ, Aₗ, ...) oder (Aₖ, Aₗ, ...) mit mindestens einem Referenzpunkt (Rₖ, Rₗ, ...), (Rₖ, Sₗ,...) oder (Sₖ, Sₗ,...) in dem mindestens 2-dimensionalen Unterraum verglichen. Beispielsweise kann der Abstand zwischen Messpunkt und Referenzpunkt in dem mindestens 2-dimensionalen Unterraum ermittelt werden. Anschließend wird ein Überwachungsergebnis auf Grundlage des Vergleichs mit dem Referenzpunkt ermittelt.

Bei einem mechanischen Fügeverfahren können verschiedene unterschiedlichste Fehler auftreten. Beispiele umfassen unter anderem einen unzureichenden Kraft- oder Formschluss. Beispielsweise können Bestandteile beim Umformen einreißen. Weiterhin kann beispielsweise beim Stanznieten das Nietelement eine falsche Geometrie haben, beispielsweise eine falsche Länge. Die aneinander zu fügenden Teile können nicht korrekt positioniert oder zentriert sein, zusammenzufügende Komponenten können beschädigt sein und anderes.

Gemäß Ausführungsform kann vor Durchführung des erfindungsgemäßen Verfahrens eine Vielzahl von Referenzmessungen durchgeführt werden, bei denen beispielsweise ein bestimmter Fehler bewusst erzeugt wird. Sodann wird eine Vielzahl von Messwerten erzeugt, wobei die Messwerte jeweils die für die eigentliche Prozessüberwachung verwendeten Prozessgrößen miteinander in Beziehung setzen. Weiterhin wird zur Ermittlung der Referenzpunkte eine Vielzahl von Messwerten bei fehlerfrei zusammengefügten Teilen erzeugt. Es wird eine Fouriertransformation der erhaltenen Messwerte sowohl für die Messwerte bei bewusst fehlerhaft durchgeführtem Verfahren als auch bei fehlerfreiem Verfahren durchgeführt. Üblicherweise werden sowohl bei den fehlerhaft als auch bei den fehlerfrei zusammengefügten Teilen jeweils eine Vielzahl von Messreihen durchgeführt, so dass schließlich eine Punktewolke jeweils für fehlerfreie als auch für fehlerhafte Prozesse erhalten wird.

Anschließend werden Frequenzen bestimmt, bei denen die entsprechenden Fehler besonders deutlich erkennbar sind, d.h. bei denen die Abweichung zwischen den Messpunkten für den fehlerhaften Prozess und den fehlerfreien Prozess besonders groß ist. Die hier ermittelten Frequenzen entsprechen denjenigen Parametern k und l und gegebenenfalls weiteren, deren zugehörige Fourierkoeffizienten bei Durchführung des erfindungsgemäßen Verfahrens untersucht werden. Die Fourierkoeffizienten der Parameter k und l und gegebenenfalls weitere der Messwerten bei fehlerfrei zusammengefügten Teilen entsprechen dabei gemäß Ausführungsformen den Referenzpunkten. Gemäß weiteren Ausführungsformen können "gemischte" Koeffizienten, also beispielsweise Phasenwinkel ϕₖ und Amplituden Aₗ ermittelt werden, bei denen die Abweichung zwischen den Messpunkten für den fehlerhaften Prozess und den fehlerfreien Prozess besonders groß ist.

Beispielsweise wird ermittelt, dass Fehler 1 besonders deutlich bei einer Auftragung der Phasen 1 und 3 auftritt, während Fehler 2 besonders deutlich bei einer Auftragung der Phasen 4 und 7 auftritt. Entsprechend wird zur Auswertung der Messwerte, zur Bestimmung des Fehlers 1, die Anzahl von Fourierkoeffizienten auf den Messpunkt (ϕ₁, ϕ₃) reduziert. Genauso wird für Überprüfung des Fehlers 2 die Anzahl von Fourierkoeffizienten auf den Messpunkt (ϕ₄, ϕ₇) reduziert. Sodann wird der jeweils erhaltene Messpunkt mit jeweils dem Referenzpunkt (R₁, R₃) oder (R₄, R₇) verglichen. Gemäß weiteren Ausführungsformen kann beispielsweise festgestellt werden, dass Fehler 3 besonders deutlich bei einer Auftragung des Phasenwinkels 3 gegen Amplitude 5 auftritt oder dass Fehler 4 besonders deutlich bei einer Auftragung der Amplitude 3 gegen Amplitude 7 auftritt. In diesem Fall wird zur Auswertung der Messwerte, zur Bestimmung von Fehler 3, die Anzahl von Fourierkoeffizienten auf den Messpunkt (ϕ₃, A₅) reduziert. In entsprechender Weise wird zur Bestimmung des Fehlers 4 die Anzahl von Fourierkoeffizienten auf den Messpunkt (A₃, A₇) reduziert. Sodann wird der jeweils erhaltene Messpunkt jeweils mit dem Referenzpunkt (R₃,S₅) oder (S₃,S₇) verglichen.

Als Ergebnis kann beispielsweise sowohl ermittelt werden, ob die Messwerte ordnungsgemäß oder nicht ordnungsgemäß sind. Weiterhin kann ermittelt werden, ob beispielsweise Fehler 1 vorliegt, oder nicht oder ob Fehler 2 vorliegt oder nicht. Durch das beschriebenen Verfahren ist es insbesondere in den Fällen möglich, ein genaues Überwachungsergebnis zu ermitteln, in denen die Messkurven 114, 116 wie in Figur 2 dargestellt sind und eine eindeutige Zuordnung zu ordnungsgemäß oder nicht-ordnungsgemäß nicht ohne weiteres möglich ist. Durch die Reduktion der Anzahl von Fourierkoeffizienten wird ein Vergleich der Punktewolke in den Phasen durchgeführt, die einen bestimmten Fehler besonders gut abbilden.

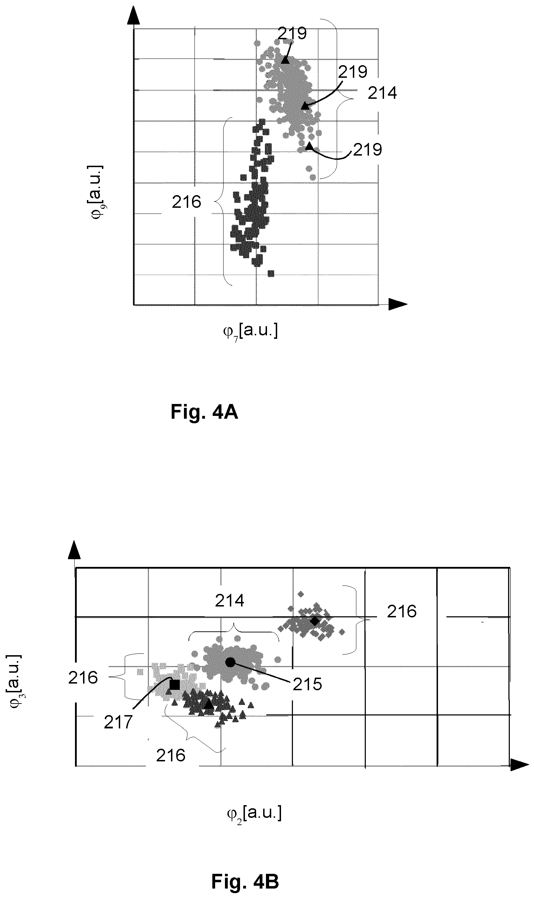

Figur 4A zeigt als Beispiel die Auftragung einer Vielzahl von Messpunkten, beispielsweise ϕ₉ gegen ϕ₇ für eine Vielzahl von durchgeführten Messreihen. Wie zu erkennen ist, gibt es eine erste Punktewolke von ordnungsgemäßen Messpunkten 214 und eine zweite Punktewolke von nicht-ordnungsgemäßen Messpunkten 216. Beispielsweise kann die Unterscheidung in ordnungsgemäß oder nicht-ordnungsgemäß erfolgen, indem ein Abstand zu mindestens einem Referenzpunkt 219 ermittelt wird. Es kann auch eine Vielzahl von Referenzpunkten verwendet werden, wobei beispielsweise zur Unterscheidung in ordnungsgemäß oder nicht-ordnungsgemäß jeweils der Abstand der Messpunkte zu einem Schwerpunkt der Referenzpunkte ermittelt wird. Gemäß weiteren Ausführungsformen kann auch jeweils der Abstand zu einem nächstliegenden Referenzpunkt verwendet werden.

Figur 4B zeigt eine Auftragung von Messpunkten, die sowohl ordnungsgemäße Messpunkte 214 als auch nicht-ordnungsgemäße Messpunkte 216 umfasst. Wie zu erkennen ist, sind jeweils eine Vielzahl von Messpunkten an bestimmten Stellen charakteristisch gehäuft. Je nach Lage der entsprechenden Messpunkte kann beispielsweise auf einen speziellen Fehler geschlossen werden. Zu einer Punktewolke kann jeweils ein Schwerpunkt 215 (ordnungsgemäße Messpunkte) oder 217 (nicht-ordnungsgemäße Messpunkte) ermittelt werden.

Wie beschrieben worden ist, kann durch Vergleich des Messpunkts mit mindestens einem Referenzpunkt in einem speziellen, mindestens 2-dimensionalen Unterraum erkannt werden, ob der Messpunkt ordnungsgemäß ist oder nicht und welcher Fehler gegebenenfalls vorliegt. Weiterhin kann durch das beschriebene Verfahren ein Trend oder ein Driften des Prozesses erkannt werden. Beispielsweise kann erkannt werden, dass sich Messpunkte in einem speziellen 2-dimensionalen Unterraum im Lauf der Zeit immer mehr von einem Referenzpunkt entfernen und somit ein Driften des Prozesses stattfindet. Beispielsweise kann ermittelt werden, dass sich der Schwerpunkt der Messpunkte im Lauf der Zeit verschiebt.

Generell kann als Ergebnis des Verfahrens ein zusammengefügtes Bauteil als fehlerhaft erkannt und aussortiert werden. Gemäß weiteren Ausführungsformen kann es auch erneut zusammengefügt oder repariert werden. Dabei kann insbesondere ein spezieller Prozessparameter verändert werden, so dass der Fehler nicht wieder auftritt.

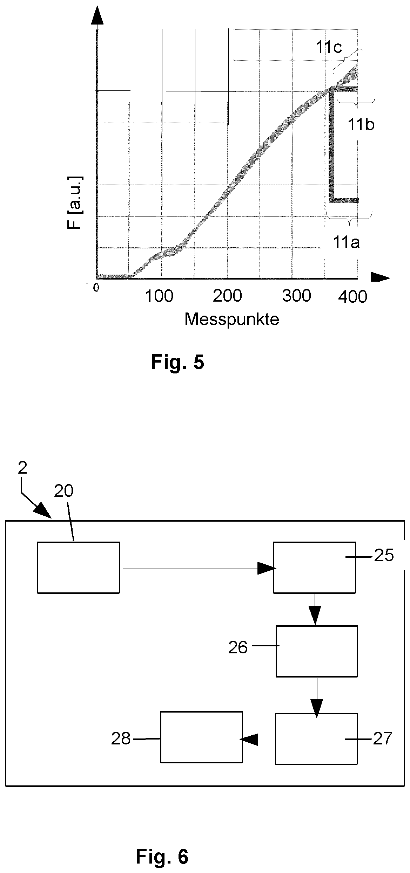

Gemäß Ausführungsformen kann die Anzahl der Messwerte eine Zweierpotenz sein. D.h. die Anzahl der Messwerte lässt sich durch 2^{m} darstellen, wobei m eine natürliche Zahl ist. Beispielsweise kann bei einer höheren Anzahl von Messwerten die Auswertelänge auf eine Zweierpotenz reduziert werden. Alternativ kann die Anzahl der Messwerte mit einem Verfahren, das nachfolgend unter Bezugnahme auf Fig. 5 erläutert wird, erweitert werden. Auf diese Weise kann die Fouriertransformation als eine schnelle Fouriertransformation durchgeführt werden, wodurch Verarbeitungszeit eingespart werden kann und das Verfahren schneller gemacht wird.

Weiterhin ist für eine eindeutige und automatische Durchführung des Verfahrens erforderlich, dass die Auswertelänge, d.h. die Anzahl an ausgewerteten Messwerten, für jede Messung identisch ist. Wird beispielsweise die Fügekraft in Abhängigkeit des Fügewegs ermittelt, so kann je nach Geschwindigkeit des Fügevorgangs eine unterschiedliche Anzahl von Messwerten erfasst werden. In diesem Fall wird gemäß Ausführungsformen die Anzahl an Messwerten auf einen vorgegebenen Wert, d.h. die vorgegebene Auswertelänge erweitert. Mögliche Erweiterungsverfahren sind genauer in Figur 5 veranschaulicht. Beispielsweise kann, wie mit 11b gekennzeichnet, die zuletzt gemessene Prozessgröße fᵢ jeweils konstant beibehalten werden. Gemäß weiteren Ausführungsformen kann, wie mit 11a bezeichnet, nach dem letzten tatsächlich gemessenen Wert der Mittelwert über die erfassten Messwerte fᵢ fortgesetzt werden.

Gemäß einer weiteren Ausführungsform kann eine Steigung ermittelt werden und die Datenpunkte werden jeweils entsprechend dieser Steigung bestimmt, wie mit 11c bezeichnet ist. Hierzu kann beispielsweise eine Steigung über die letzten n Datenpunkte erfolgen.

Gemäß weiteren Ausführungsformen ist es möglich, dass nur ein kleinerer Wertebereich der erfassten Messwerte entsprechend dem beschriebenen Verfahren ausgewertet wird. Beispielsweise kann ein bestimmter Wertebereich besonders charakteristisch für das entsprechende Fügeverfahren sein. Insbesondere kann ein bestimmter Fehler lediglich in einem speziellen Bereich auftreten, beispielsweise in der in Figur 2 gezeigten Darstellung der Bereich zwischen s₁ und s₂. In diesem Fall wird das beschriebene Verfahren nur für diejenigen Messwerte mit s₁ ≤ xi ≤ s₂ durchgeführt.

Bei Betrachtung eines Unterbereichs der Messwerte ist wiederum für eine eindeutige und automatische Durchführung des Verfahrens erforderlich, dass die Auswertelänge für jede Messung identisch ist. Das heißt, in diesem Fall kann die Anzahl an Messwerten auf einen vorgegebenen Wert, die vorgegebene Auswertelänge erweitert werden. Dies kann wiederum gemäß den in Figur 5 veranschaulichten Verfahren erfolgen. Beispielsweise kann hier die Anzahl der Messwerte wiederum eine Zweierpotenz sein, so dass die Fouriertransformation als schnelle Fouriertransformation durchgeführt werden kann. Alternativ kann die Anzahl an Messwerte auch auf einen vorgegebenen Wert verringert werden.

Gemäß weiteren Ausführungsformen kann weiterhin, beispielsweise bei Betrachtung einer Vielzahl möglicher Fehlertypen oder bei der Betrachtung einer Vielzahl von Unterräumen der Vergleich in den verschiedenen Unterräumen nacheinander durchgeführt werden. Wenn beispielsweise in allen betrachteten Unterräumen der Messpunkt ordnungsgemäß ist, so kann das Überprüfungsergebnis insgesamt als ordnungsgemäß bezeichnet werden.

Figur 6 zeigt eine Vorrichtung 2 zur Prozessüberwachung bei einem mechanischen Fügeverfahren. Wie in Figur 6 gezeigt ist, umfasst die Vorrichtung 2 eine Einrichtung 20 zum Empfangen einer Vielzahl von Messwerten bei Durchführung des mechanischen Fügeverfahrens, wobei die Messwerte jeweils mindestens 2 Prozessgrößen fᵢ, xᵢ, mit i = 1... n, zueinander in Beziehung setzen. Die Vorrichtung umfasst weiterhin eine Einrichtung 25 zum Durchführen einer Fouriertransformation, wobei zu den Messwerten fi(xi) eine Anzahl von Fourierkoeffizienten (ϕ₁, ϕ₂,...ϕₙ, A₁, A₂,... Aₙ) ermittelt wird. Die Vorrichtung 2 umfasst ferner eine Einrichtung 26 zur Reduktion der Anzahl von Fourierkoeffizienten auf einen mindestens 2-dimensionalen Unterraum, wodurch ein Messpunkt (ϕk, ϕl,....), (ϕₖ, Aₗ ,....) oder (Aₖ, Aₗ,....) erhalten wird. Die Vorrichtung 2 umfasst weiterhin eine Einrichtung 27 zum Vergleich des Messpunkts (ϕk, ϕl,....), (ϕₖ, Aₗ,....) oder (Aₖ, Aₗ,....) mit mindestens einem Referenzpunkt (Rk, Rl,...), (Rₖ, Sₗ,...) oder (Sₖ, Sₗ,...) in dem mindestens 2-dimensionalen Unterraum. Die Vorrichtung umfasst darüber hinaus eine Einrichtung 28 zum Ermitteln eines Überwachungsergebnisses auf Grundlage des Vergleichs mit dem Referenzpunkt.

Die Vorrichtung 20 zum Empfangen einer Vielzahl von Messwerten kann beispielsweise ein Sensor sein. Gemäß weiteren Ausführungsformen kann die Vorrichtung zum Empfangen einer Vielzahl von Messwerten jedoch eine übliche Vorrichtung zum Empfangen von Daten sein. In diesem Fall kann die Sensorvorrichtung von der Vorrichtung zur Prozessüberwachung getrennt sein. Die Einrichtungen 25, 26, 27 und 28 zum Durchführen der Fouriertransformation, zur Reduktion der Anzahl von Fourierkoeffizienten, zum Vergleich des Messpunkts und zum Ermitteln des Überwachungsergebnisses können beispielsweise durch einen Prozessor realisiert sein. Gemäß weiteren Ausführungsformen können die Einrichtungen 25, 26, 27 und 28 auch in verschiedenen Prozessoren, also beispielsweise unterschiedlichen Computern, die beispielsweise an unterschiedlichen Orten angeordnet sein können, verwirklicht sein.

## Patentansprüche

1. Verfahren zur Prozessüberwachung bei einem mechanischen Fügeverfahren, umfassend:
Empfangen (S100) einer Vielzahl von Messwerten fᵢ(xᵢ) bei Durchführung des mechanischen Fügeverfahrens, wobei die Messwerte jeweils mindestens 2 Prozessgrößen fᵢ, xᵢ, mit i = 1... n, zueinander in Beziehung setzen,
Durchführen (S110) einer Fouriertransformation, wobei zu den Messwerten fᵢ(xᵢ) eine Anzahl von Fourierkoeffizienten (ϕ₁, ϕ₂,...ϕₙ, A₁, A₂,... Aₙ) ermittelt wird,
Reduktion (S120) der Anzahl von Fourierkoeffizienten auf einen mindestens 2-dimensionalen Unterraum, wodurch ein Messpunkt (ϕₖ, ϕₗ,....), (ϕₖ, Aₗ,....) oder (Aₖ, Aₗ,....) (214, 216) erhalten wird,
Vergleich (S130) des Messpunkts (ϕk, ϕl,....), (ϕₖ, Aₗ,...) oder (Aₖ, Aₗ,...) (214, 216) mit mindestens einem Referenzpunkt (Rₖ, Rₗ,...), (Rₖ, Sₗ,...) oder (Sₖ, Sₗ,...) (219) in dem mindestens 2-dimensionalen Unterraum, und
Ermitteln (S140) eines Überwachungsergebnisses auf Grundlage des Vergleichs mit dem Referenzpunkt (219).

2. Verfahren nach Anspruch 1, ferner umfassend das Erweitern der empfangenen Messwerte auf eine zuvor definierte Anzahl.

3. Verfahren nach Anspruch 2, bei dem die Messwerte durch Fortsetzen der zuletzt gemessenen Prozessgröße fᵢ erweitert werden.

4. Verfahren nach Anspruch 3, bei dem die Messwerte durch Fortsetzen eines Mittelwerts der gemessenen Prozessgrößen fᵢ erweitert werden.

5. Verfahren nach Anspruch 2, bei dem die Messwerte durch Fortsetzen der Prozessgrößen unter Verwendung einer Tangente an einen Bereich der Messwerte erweitert werden.

6. Verfahren nach einem der vorhergehenden Ansprüche, bei dem die Fourierkoeffizienten Phasenwinkel umfassen.

7. Verfahren nach Anspruch 6, bei dem die Fourierkoeffizienten weiterhin Amplituden zu den jeweiligen Phasenwinkeln umfassen.

8. Verfahren nach einem der vorhergehenden Ansprüche, bei dem der mindestens 2-dimensionale Unterraum entsprechend einem zu untersuchenden Fehler ausgewählt wird.

9. Verfahren nach einem der vorhergehenden Ansprüche, bei dem das Überwachungsergebnis eine Zuordnung zu einem Fehlertyp umfasst.

10. Verfahren nach einem der vorhergehenden Ansprüche, bei dem das Überwachungsergebnis das Erkennen einer zeitlichen Prozessveränderung umfasst.

11. Verfahren nach einem der Ansprüche 6 bis 10, ferner umfasssend:
Auswählen eines bestimmten Wertebereichs [x₁, x₂], wobei die Fouriertransformation nur für Messwerte mit x₁ ≤ xᵢ ≤ x₂ durchgeführt wird.

12. Verfahren nach Anspruch 11, ferner umfassend das Ändern der Anzahl der Messwerte mit x₁ ≤ xᵢ ≤ x₂ auf eine zuvor definierte Anzahl vor Durchführen der Fouriertransformation.

13. Verfahren nach Anspruch 12, bei dem die zuvor definierte Anzahl eine Zweierpotenz ist.

14. Verfahren nach einem der vorhergehenden Ansprüche, ferner umfassend:
Durchführen des Vergleichs des Messpunkts in einem weiteren Unterraum, wobei das Überwachungsergebnis zusätzlich auf Grundlage des Vergleichs mit dem Referenzpunkt in dem weiteren Unterraum ermittelt wird.

15. Computerprogramm umfassend Befehle, die bei der Ausführung des Computerprogramms durch einen Computer diesen veranlassen, das Verfahren nach einem der Ansprüche 1 bis 14 durchzuführen.

16. Vorrichtung zur Datenverarbeitung umfassend Mittel zur Ausführung des Verfahrens nach einem der Ansprüche 1 bis 14.

17. Computerlesbares Medium umfassend Befehle, die bei der Ausführung durch einen Computer diesen veranlassen, das Verfahren nach einem der Ansprüche 1 bis 14 auszuführen.

18. Vorrichtung (2) zur Prozessüberwachung bei einem mechanischen Fügeverfahren, umfassend:
eine Einrichtung (20) zum Empfangen einer Vielzahl von Messwerten fᵢ(xᵢ) bei Durchführung des mechanischen Fügeverfahrens, wobei die Messwerte jeweils mindestens 2 Prozessgrößen fᵢ, xᵢ, mit i = 1... n, zueinander in Beziehung setzen,
eine Einrichtung (25) zum Durchführen einer Fouriertransformation, wobei zu den Messwerten fᵢ(xᵢ) eine Anzahl von Fourierkoeffizienten (ϕ₁, ϕ₂,... ϕₙ, A₁, A₂,... Aₙ) ermittelt wird,
eine Einrichtung (26) zur Reduktion der Anzahl von Fourierkoeffizienten auf einen mindestens 2-dimensionalen Unterraum, wodurch ein Messpunkt (ϕₖ, ϕₗ,....), (ϕₖ, Aₗ,....) oder (Aₖ, Aₗ,....) (214, 216) erhalten wird,
eine Einrichtung (27) zum Vergleichen des Messpunkts (ϕk, ϕl,....), (ϕₖ, Aₗ,....) oder (Aₖ, Aₗ,....) (214, 216) mit mindestens einem Referenzpunkt (Rₖ, Rₗ,...), (Rₖ, Sₗ,...) oder (Sₖ, Sₗ,...) (219) in dem mindestens 2-dimensionalen Unterraum, und
eine Einrichtung (28) zum Ermitteln eines Überwachungsergebnisses auf Grundlage des Vergleichs mit dem Referenzpunkt (219).

## Claims

1. Method for process monitoring in a mechanical joining process, the method comprising:
receiving (S100) a plurality of measured values fᵢ(xᵢ) during the performance of the mechanical joining process, wherein the measured values each relate at least 2 process variables fᵢ, xᵢ, where i = 1... n, to one another,
performing (S110) a Fourier transform, wherein a number of Fourier coefficients (φ₁, φ₂,...φ_{n,} A₁, A₂,...Aₙ) are determined for the measured values fᵢ(xᵢ) ,
reducing (S120) the number of Fourier coefficients to an at least 2-dimensional subspace, thereby obtaining a measuring point (φₖ, φₗ,....), (φₖ, Aₗ,....) or (Aₖ, Aₗ,....) (214, 216),
comparing (S130) the measuring point (φk, φl,.....), (φₖ, Al,...) or (Aₖ, Aₗ,...) (214, 216) with at least one reference point (Rₖ, Rₗ,...), (Rₖ, Sₗ,...) or (Sₖ, Sₗ,...) (219) in the at least 2-dimensional subspace, and
determining (S140) a monitoring outcome on the basis of the comparison with the reference point (219).

2. Method according to claim 1, further comprising extending the received measured values to a predefined number.

3. Method according to claim 2, in which the measured values are extended by continuing the last measured process variable fᵢ.

4. Method according to claim 3, in which the measured values are extended by continuing a mean value of the measured process variables fᵢ.

5. Method according to claim 2, in which the measured values are extended by continuing the process variables using a tangent to a range of the measured values.

6. Method according to any of the preceding claims, in which the Fourier coefficients comprise phase angles.

7. Method according to claim 6, in which the Fourier coefficients further comprise amplitudes at the respective phase angles.

8. Method according to any of the preceding claims, in which the at least 2-dimensional subspace is selected in accordance with an error to be investigated.

9. Method according to any of the preceding claims, in which the monitoring outcome comprises an assignment to a fault type.

10. Method according to any of the preceding claims, in which the monitoring outcome comprises detecting a change in the process over time.

11. Method according to any of claims 6 to 10, further comprising:
selecting a specific range of values [x₁, x₂], wherein the Fourier transform is only performed for measured values where x₁ ≤ xᵢ ≤ x₂.

12. Method according to claim 11, further comprising changing the number of measured values where x₁ ≤ xᵢ ≤ x₂ to a predefined number before performing the Fourier transform.

13. Method according to claim 12, in which the predefined number is a power of two.

14. Method according to any of the preceding claims, further comprising:
performing the comparison of the measuring point in a further subspace, wherein the monitoring outcome is additionally determined on the basis of the comparison with the reference point in the further subspace.

15. Computer program comprising instructions which, when the computer program is executed by a computer, cause said computer to execute the method according to any of claims 1 to 14.

16. Data processing device comprising means for executing the method according to any of claims 1 to 14.

17. Computer-readable medium comprising instructions which, when executed by a computer, cause said computer to execute the method according to any of claims 1 to 14.

18. Device (2) for process monitoring in a mechanical joining process, the device comprising:
an apparatus (20) for receiving a plurality of measured values fᵢ(xᵢ) during the performance of the mechanical joining process, wherein the measured values each relate at least 2 process variables fᵢ, xᵢ, where i = 1... n, to one another,
an apparatus (25) for performing a Fourier transform, wherein a number of Fourier coefficients (φᵢ, φ₂,...φ_{n,} A₁, A₂,...Aₙ) are determined for the measured values fi(xᵢ),
an apparatus (26) for reducing the number of Fourier coefficients to an at least 2-dimensional subspace, thereby obtaining a measuring point (φₖ, φₗ,....), (φₖ, Aₗ,....) or (Aₖ, Aₗ,....) (214, 216),
an apparatus (27) for comparing the measuring point (φk, φl,....), (φₖ, Al,...) or (Aₖ, Al,...) (214, 216) with at least one reference point (Rₖ, Rₗ,...), (Rₖ, Sₗ,...) or (Sₖ, Sₗ,...) (219) in the at least 2-dimensional subspace, and
an apparatus (28) for determining a monitoring outcome on the basis of the comparison with the reference point (219).

## Revendications

1. Procédé de surveillance de processus lors d'un procédé d'assemblage mécanique, comprenant :
la réception (S100) d'une pluralité de valeurs de mesure fᵢ(xᵢ) lors de la réalisation du procédé d'assemblage mécanique, dans lequel les valeurs de mesure relient entre elles respectivement au moins 2 variables de processus fᵢ, xᵢ, avec i = 1... n,
la réalisation (S110) d'une transformation de Fourier, dans lequel pour les valeurs de mesure fᵢ(xᵢ), un certain nombre de coefficients de Fourier (φ₁, φ₂,...φ_{n,} A₁, A₂,... Aₙ) sont déterminés,
la diminution (S120) du nombre de coefficients de Fourier à un sous-espace au moins bidimensionnel, moyennant quoi un point de mesure (φₖ, φₗ,....), (φₖ, Aₗ,....) ou (Aₖ, Aₗ,....) (214, 216) est obtenu,
la comparaison (S130) du point de mesure (φₖ, φₗ,....), (φₖ, Aₗ,...) ou (Aₖ, Aₗ,...) (214, 216) à au moins un point de référence (Rₖ, Rₗ,...), (Rₖ, Sₗ,...) ou (Sₖ, Sₗ,...) (219) dans l'au moins un sous-espace bidimensionnel, et
la détermination (S140) d'un résultat de surveillance sur la base de la comparaison avec le point de référence (219).

2. Procédé selon la revendication 1, comprenant en outre l'extension des valeurs de mesure reçues à un nombre prédéfini.

3. Procédé selon la revendication 2, pour lequel les valeurs de mesure sont étendues en maintenant la dernière variable de processus mesurée fᵢ.

4. Procédé selon la revendication 3, pour lequel les valeurs de mesure sont étendues en maintenant une valeur moyenne des variables de processus mesurées fᵢ.

5. Procédé selon la revendication 2, pour lequel les valeurs de mesure sont étendues en maintenant les variables de processus à l'aide d'une tangente à une plage de valeurs de mesure.

6. Procédé selon l'une quelconque des revendications précédentes, pour lequel les coefficients de Fourier comprennent un angle de phase.

7. Procédé selon la revendication 6, pour lequel les coefficients de Fourier comprennent en outre des amplitudes pour les angles de phase respectifs.

8. Procédé selon l'une quelconque des revendications précédentes, pour lequel le sous-espace au moins bidimensionnel est choisi en fonction d'un défaut à rechercher.

9. Procédé selon l'une quelconque des revendications précédentes, pour lequel le résultat de surveillance comprend une affectation à un type de défaut.

10. Procédé selon l'une quelconque des revendications précédentes, pour lequel le résultat de surveillance comprend la reconnaissance d'une modification de processus temporelle.

11. Procédé selon l'une quelconque des revendications 6 à 10, comprenant en outre :
la sélection d'une plage de valeurs définie [x₁, x₂], dans lequel la transformation de Fourier n'est réalisée que pour des valeurs de mesure avec x₁ ≤ xᵢ ≤ x₂.

12. Procédé selon la revendication 11, comprenant en outre la modification du nombre de valeurs de mesure avec x₁ ≤ xᵢ ≤ x₂ à un nombre prédéfini avant la réalisation de la transformation de Fourier.

13. Procédé selon la revendication 12, pour lequel le nombre prédéfini est une puissance de deux.

14. Procédé selon l'une quelconque des revendications précédentes, comprenant en outre :
la réalisation de la comparaison du point de mesure dans un autre sous-espace, dans lequel le résultat de surveillance est déterminé en outre sur la base de la comparaison avec le point de référence dans un autre sous-espace.

15. Programme informatique comprenant des instructions, qui lors de l'exécution du programme informatique par un ordinateur amènent celui-ci à réaliser le procédé selon l'une quelconque des revendications 1 à 14.

16. Dispositif de traitement des données comprenant un moyen pour la mise en oeuvre du procédé selon l'une quelconque des revendications 1 à 14.

17. Support lisible par ordinateur comprenant des instructions, qui lors de l'exécution par un ordinateur amènent celui-ci à mettre en oeuvre le procédé selon l'une quelconque des revendications 1 à 14.

18. Dispositif (2) de surveillance de processus lors d'un procédé d'assemblage mécanique, comprenant :
un appareil (20) pour recevoir une pluralité de valeurs de mesure fᵢ(xᵢ) lors de la réalisation du procédé d'assemblage mécanique, dans lequel les valeurs de mesure relient entre elles respectivement au moins 2 variables de processus fᵢ, xᵢ, avec i = 1... n,
un appareil (25) pour réaliser une transformation de Fourier, dans lequel pour les valeurs de mesure fᵢ(xᵢ) un certain nombre de coefficients de Fourier (φ₁, φ₂,...φₙ, A₁, A₂,... Aₙ) sont déterminés,
un appareil (26) pour diminuer le nombre de coefficients de Fourier à un sous-espace au moins bidimensionnel, moyennant quoi un point de mesure (φₖ, φₗ,....), (φₖ, Aₗ,....) ou (Aₖ, Aₗ,....) (214, 216) est obtenu,
un appareil (27) pour comparer le point de mesure (φk, φl,....), (φₖ, Aₗ,....) ou (Aₖ, Aₗ,....) (214, 216) à au moins un point de référence (Rₖ, Rₗ,...), (Rₖ, Sₗ,...) ou (Sₖ, Sₗ,...) (219) dans le sous-espace au moins bidimensionnel, et
un appareil (28) pour déterminer un résultat de surveillance sur la base de la comparaison au point de référence (219).
